# EUROPÄISCHE PATENTSCHRIFT

(11) **EP 0 313 723 B1**
(45) Veröffentlichungstag und Bekanntmachung des Hinweises auf die Patenterteilung: **24.11.1993**
(21) Anmeldenummer: 88105702.0
(22) Anmeldetag: 11.04.1988
(51) Int. Cl.: B09B 3/00

(54) **Verfahren und Vorrichtung zur Herstellung eines als Futter oder Düngemittel verwendbaren Feststoffes in Form von Pellets, Flocken oder Granulat**
Method and device for manufacturing a solid material usable as food or fertilizer, in form of pellets, flakes or granules
Procédé et dispositif de fabrication d'une matière solide utilisable comme aliment ou engrais, sous forme de boulettes, flocons ou granulés

(30) Priorität: 28.10.1987 CH 4298/87
(43) Veröffentlichungstag der Anmeldung: 03.05.1989
(73) Patentinhaber: Strittmatter, Herbert, CH-5000 Aarau (CH)
(72) Erfinder: Strittmatter, Herbert, CH-5000 Aarau (CH)
(74) Vertreter: Fillinger, Peter, Dr.

(56) Entgegenhaltungen:
- EP-A- 0 231 825
- DE-A- 1 592 731
- FR-A- 2 444 017
- FR-A- 2 575 400
- GB-A- 9 413

## Beschreibung

Die vorliegende Erfindung bezieht sich auf ein Verfahren bzw. eine Vorrichtung zur Herstellung eines Feststoffes in Form von Pellets, Flocken oder Granulat gemäss dem Oberbegriff des Anspruchs 1 bzw. 2.

In der Nahrungsmittel- und Getränkeproduktion und Industrie wie in Geflügel- und Tierschlächtereien, Fischfabriken, Gerbereien, Molkereien, Brauereien und anderen tierische und/oder pflanzliche Stoffe verarbeitenden Industrien entstehen nicht schüttfähige und/oder nicht in Sikos lagerbare Abfälle. Nicht schüttfähig sind sie, weil sie von gallertiger, klebriger Konsistenz und klumpiger oder verhakender Form sind. Nicht in Silos lagerfähig sind sie meist wegen des zu hohen Wassergehaltes, was eine rasche Fäulnis herbeiführt oder wegen einer zu geringen Festigkeit, wodurch die unteren Lagen in einem Silo von den oberen zerdrückt werden, die dann nicht mehr austragfähig sind. Zu den nicht schüttfähigen und/oder nicht in Silos lagerbaren Abfällen gehören u.a., Maschinenleimleder, Spaltabfälle und andere Gerbereinebenprodukte, Schlachtabfälle, Abfälle aus der Fischfiletproduktion, Hühnerfüsse, Hühnerfedern, Hühnermist, usw. Weiter gehören zu den nicht in Silos lagerbaren Ausgangsstoffen Kartoffeln, Rüben, usw. Ist der Wassergehalt solcher Abfälle grösser als 70 % werden sie als Nassabfälle bezeichnet.

Als schüttfähige und in Silos lagerbare Ausgangsstoffe gelten u.a. Getreide oder sonstiges Stärke- oder Rohfaserstoffe enthaltendes Korngut sowie Ölsaaten und Ölfrüchte mit geringem Wassergehalt.

Der Verlad, Transport und Ablad von nicht schüttfähigen und/oder in Silos nicht lagerbaren Ausgangsstoffen ist aufwendig. Handelt es sich bei diesen Ausgangsstoffen um sog. nasse Abfälle, ist der Transport wegen des hohen Wassergehalts besonders unwirtschaftlich und eine Trocknung am Ort ihres Anfalls wegen des damit verbundenen materiellen und energetischen Aufwands und/oder der damit verbundenen Immissionen nicht möglich.

Aus der EP-A-231825 ist ein Verfahren und eine Vorrichtung zur Herstellung von Tierfutter bekannt. Bei diesem Verfahren wird der Rohstoff, zum Beispiel Körner, Bohnen oder Fischmehl oder eine Rohstoffmischung durch einen Einfülltrichter dem Verarbeitungsprozess zugeführt. Der zugeführte Rohstoff wird vorerst in einem Durchlaufmischer homogenisiert, in einem Zwischenspeicher konditioniert und anschliessend unter Druck erhitzt und entspannt. Die Beschaffenheit der Rohstoffe und gegebenenfalls der Mischung ist offengelassen, obwohl gerade deren Eigenschaften, wie Schütt- und Lagerfähigkeit den Aufwand und die apparativen Einrichtungen für den Transport, die Umladung, die Art der Lagerung und der Dosierung weitgehend bestimmen.

Wären mit einer solchen bekannten Vorrichtung in kontinuierlichem Betrieb die Abfälle einer Schlächterei oder Gerberei zu verarbeiten, ergäbe sich entweder ein beachtlicher Transport- und Lageraufwand für diese Rohstoffe (Kühlfahrzeuge und Kühllager oder Trocknungseinrichtungen) oder die Anlage müsste wegen der Geruchsemissionen weitab von Siedlungsgebieten aufgestellt oder in Gebäuden mit Unterdruckatmosphäre und deodorierenden Filteranlagen betrieben werden.

Die gattungsfremde DE-A 15 92 731 zeigt im Prinzip bloss eine Mehrzahl durch Wände begrenzter Kompostmieten, in denen zerkleinerte organische Abfälle gleichmässig aufgeschichtet und einem Verrottungsprozess ausgesetzt werden. Gegenüber den bekannten Gärtrommeln und Gärtürmen industrieller Kompostieranlagen, die im Durchlaufprinzip arbeiten und ein Produkt wechselnder Qualität liefern, soll mit dieser Einrichtung durch Vorsortieren und dosiertes Zuteilen der Abfälle zu den Mieten ein gleichmässiges Endprodukt erreicht werden.

Die vorliegende Erfindung stellt sich die Aufgabe, ein Verfahren und eine Vorrichtung der eingangs genannten Art derart zu verbessern, dass nicht schüttfähige und/oder nicht in Silos lagerbare pflanzliche und/oder tierische Ausgangsstoffe oder sonstige Nassabfälle mit geringem Transportaufwand und ohne zusätzliche Immissionen am Ort ihrer Entstehung zu handelsfähigem Tierfutter oder Düngemittel verarbeitet werden können.

Erfindungsgemäss wird diese Aufgabe gelöst durch die kennzeichnenden Merkmale der Ansprüche 1 und 2. Die Erfindung nach Anspruch 2 ermöglicht es, das Verfahren auf äusserst kleinem Raum auszuführen.

Anhand der beiliegenden schematischen Zeichnung wird die Erfindung beispielsweise erläutert. Es zeigen:
Fig. 1 eine Frontansicht einer Anlage und
Fig. 2 eine Draufsicht auf Fig. 1.

Die in der Zeichnung gezeigte Anlage ist auf einer transportierbaren, rechteckigen Grundplatte 1 von 2,3 x 12 Meter angeordnet. Kein Teil der Anlage überschreitet eine Höhe von 2,45 Meter, so dass die gesamte Anlage in einem international genormten Container untergebracht, transportiert und aufgestellt werden kann. Die Grundplatte 1 weist zwei Schmalseiten 2 und 3 sowie zwei Längsseiten 4 und 5 auf. In der von der Schmalseite 3 und der Längsseite 5 gebildeten Ecke befindet sich eine Annahmegosse G für einen schüttfähigen und in Silos lagerbaren, pflanzlichen und/oder tierischen Ausgangsstoff I. Dieser Ausgangsstoff I wird von der Annahmegosse G mittels eines Förderers 6 in die Silos 7 transportiert und dort zwischengelagert. Die Silos 7 sind in Reihe entlang der Längsseite 4 aufgestellt. Zwischen den Silos 7 und der Längsseite 5 befindet sich eine Waage 8, in die der in den Silos 7 gelagerte Ausgangsstoff I selbsttätig eindosiert werden kann. Von der Waage 8 gelangt der Ausgangsstoff I über einen Förderer 9 in eine Schlagmühle 10, wo er zu Griess oder Mehl zerkleinert wird. Die zur Schlagmühle 10 gehörenden Filterschläuche 11 sind zwischen dieser und der Annahmegosse G an der Längsseite 5 der Grundplatte 1 vertikal hingestellt. Der zerkleinerte Ausgangsstoff I wird von der Schlagmühle 10 mittels eines Förderers 12 in einen Mischer 13 gefördert, wobei vor dem Mischer 13 ein Zumischtrichter 14 auf den Förderer 12 aufgesetzt ist, um zum Ausgangsstoff I Vitamine und dgl. zugeben zu können.

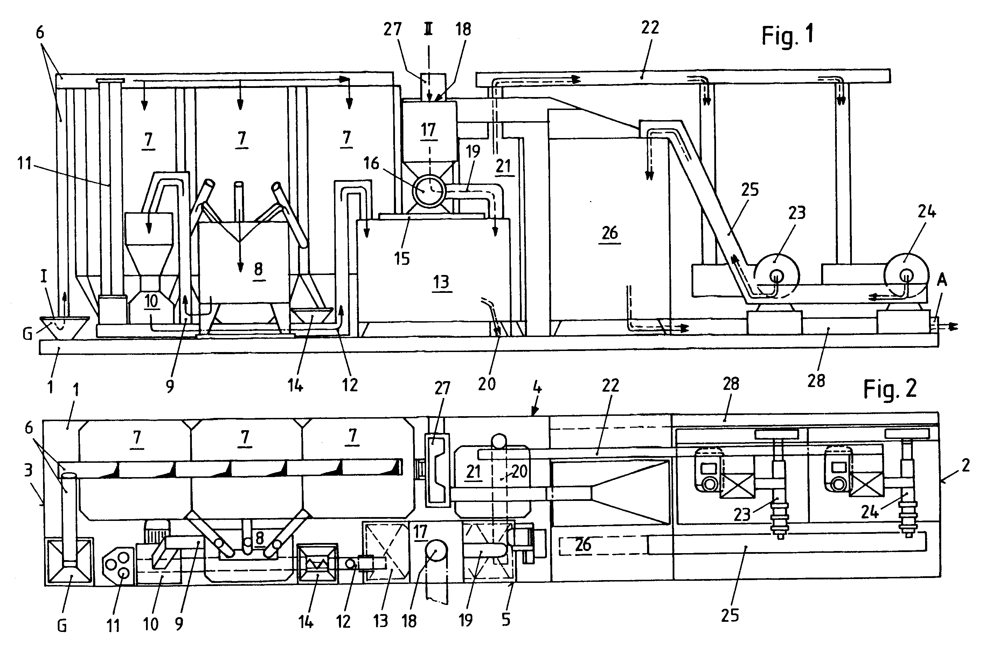

Auf den Mischer 13 ist eine elektrische Dosenwaage 15 aufgesetzt, auf deren Wägedosen ein Fleischwolf 16 mit einem Eingabetrichter 17 gestellt ist. Der Fleischwolf 16 bildet nebst der Schlagmühle 10 eine zweite Zerkleinerungseinrichtung der Anlage. Der Eingabetrichter 17 weist oben eine Eingabeöffnung 18 auf, durch die ein zweiter Ausgangsstoff II in den Eingabetrichter gegeben werden kann, der nicht schüttfähig und/oder nicht in Silos lagerbar sein kann. Der Eingabetrichter 17 wird vorzugsweise durch einen nicht dargestellten (in Fig. 2 strichpunktiert gezeichneten), über der Eingabeöffnung 18 endenden Förderer beschickt. Mittels des Fleischwolfes 16 und der Dosenwaage 15 kann der Ausgangsstoff II in dosierter Form durch ein Förderrohr 19 in den Mischer 13 abgeworfen werden. Im Fleischwolf 16 wird der Ausgangsstoff II, gleichgültig, ob er klumpig, gallertig, klebrig, nass, bzw. generell in einem Silo nicht lagerfähig oder nicht schüttfähig ist zu einer breiigen Masse zerkleinert, die im Mischer 13 dem mehligen oder griessigen Ausgangsstoff I zugemischt wird. Das den Mischer 13 verlassende Mischgut sollte einen Wasser- bzw. Ölgehalt von 16 % bzw. 8 % nicht unterschreiten. Liegt der Öl- oder Wassergehalt darunter, wird dem Mischgut in den später erwähnten Extrudern Wasser zugefügt. Ein Förderer 20 bringt das Mischgut vom Mischerausgang in ein Zwischendepot 21, von wo es im Bedarfsfall über einen Förderer 22 zwei Trockenextrudern 23 und 24 zugeführt wird. Es sind auch Anlagen mit nur einem Extruder denkbar.

Das Mischgut wird den Trockenextrudern 23, 24 vorzugsweise mit einem Wassergehalt von 20 bis 30 % zugeführt. Durch die Extruderschnecken ist das Mischgut einem weiteren Misch- und Reibvorgang unterworfen und wird auf einen Überdruck von vorzugsweise 20 bis 40 bar komprimiert und dabei auf eine Temperatur von mindestens 100° C, vorzugsweise 110 bis 180° C erhitzt. Die Durchlaufzeit des Mischgutes durch die Extruder 23, 24 beträgt höchstens 45 Sekunden. Es ist während dieser Zeitspanne nur wenige Sekunden der Temperaturspitze ausgesetzt. Beim Austritt aus der Extruderdüse entspannt sich das Mischgut unter Atmosphärendruck, wodurch 40 bis 50 % seines Wassergehaltes in Dampfform entweichen. Dabei erhärtet das Mischprodukt und fällt in Festform, je nach benutzter Matrize, in eine Förderstrecke 25, die durch einen Palettenförderer gebildet wird. Dieser bringt den noch heissen Feststoff in einen innenseitig vorzugsweise mit Kunststoff beschichteten Kühler 26, der mittels eines Gebläses 27 belüftet ist. Die Kühlluft entzieht dem Granulat im Kühler 26 weiteres Wasser in der Grössenordnung von 1 % bis 7 %. Vom Kühler 26 gelangt der gekühlte Feststoff in einen Förderer 28, der sich entlang der Längsseite 4 zur Schmalseite 2 erstreckt, wo sich die Austrittstelle A für das fertige Produkt befindet.

Der Kühler 26 ist zwischen den beiden Schmalseiten 2 und 3 und mit Abstand zu diesen derart angeordnet, dass sich zwischen ihm und der Schmalseite 2 nur der oder die Extruder 23, 24 (mit den zugehörigen Förderern) und alle übrigen Anlageteile zwischen ihm und der Schmalseite 3 befinden. Dadurch erhält der Materialfluss von der Annahmegosse G zur Austrittstelle A nach den Extrudern 23, 24 eine Umlenkung, durch die der Feststoff von den Extrudern 23, 24 zurück (in Richtung gegen die Annahmegosse G) zum Kühler 26 und dann wieder entgegengesetzt zur Ausgabestelle A bewegt werden muss. Diese Anordnung des Kühlers 26 mit Bezug auf die Extruder 23, 24 einerseits und die übrigen Anlageteile anderseits ermöglicht aber die äusserst kompakte Bauweise der Anlage , so dass sie in industriell brauchbarer Grösse auf der Rechteckgrundfläche eines genormten Containers aufgestellt werden kann. In gleicher Weise erfährt der Materialfluss eine Umlenkung nach der Waage 8, durch die das Ausgangsmaterial I zurück in Richtung gegen die Annahmegosse G zur Schlagmühle 10 und dann wieder entgegengesetzt zum Mischer 13 gefördert wird. Auch diese relative Anordnung von Waage 8 und Schlagmühle 10 ermöglichen bei guter Zugänglichkeit der Teile 8 bis 14 eine kompakte Aufstellung.

In den Extrudern 23, 24 wird das Mischgut unter Überdruck bei Temperaturen von 100° C und mehr im eigenen Saft gekocht. Dadurch wird das Mischgut sterilisiert und stabilisiert. Weiter werden im Ausgangsmaterial vorhandene Negativfaktoren, die beim Verfüttern des Mischgutes an Tiere zu Nachteilen führen können stabilisiert und Bitterstoffe und Verdauungshemmer reduziert. Durch letzteres können höhere Anteile an Sojabohnen, Rapssamen und anderen Leguminosen oder Ölfrüchten verfüttert werden. Im Mischgut vorhandene Stärke wird verkleistert und aufgeschlossen, wodurch das extrudierte Produkt wasserlöslich wird. In den Ausgangsmaterialien vorhandene Entzyme werden neutralisiert und die Pansenlöslichkeit des Proteins reduziert.

Durch den Kochvorgang wird weiter bei dem im Mischgut enthaltenen Eiweiss die Proteinmoleküle aufgebrochen, so dass diese zum Teil in die einzelnen Aminosäuren zerfallen. Die Aminosäuren selbst und ihr Nährwert bleibt in Takt. Diese Form der Eiweissdenaturierung ist erwünscht, vorallem dann, wenn sie die Neutralisierung schädlicher Eiweisse bewirkt.

Durch die mechanische Beanspruchung des Mischgutes in den Extrudern 23, 24 werden Ölzellen von Ölsaaten aufgebrochen und geben das vorhandene Öl frei. Damit erhöht sich die im tierischen Stoffwechsel verwendbare Energie. Die Strukturen zellstoffreicher Rohstoffe durchlaufen eine ähnliche Reaktion, wodurch sich die Verdaulichkeit solcher Ausgangsmaterialien erhöht.

Die nur kurze Kochzeit verhindert dabei den Abbau, die Hydrolyse oder die Oxidation der freigesetzten Öle.

Die vorstehenden Ausführungen erweisen, dass das beschriebene Verfahren generell geeignet ist, organische Abfälle, seien sie schütt- oder bunkerfähig oder nicht, als Ausgangsstoff für Futter- oder Düngemittel zu verwenden.

## Patentansprüche

1. Verfahren zur Herstellung eines Feststoffes in Form von Pellets, Flocken oder Granulat aus einer Mischung aus wenigstens einem ersten und wenigstens einem zweiten pflanzlichen und/oder tierischen Ausgangsstoff, welche Mischung unter Überdruck in einem Reaktionsraum (23, 24) auf mindestens 100° C erhitzt und anschliessend zur teilweisen Entwässerung und zur Feststoffbildung auf Atmosphärendruck entspannt werden, dadurch gekennzeichnet, dass wenigstens der erste Ausgangsstoff schütt- und in Silos (7) lagerfähig ist, und dass der erste und der zweite Ausgangsstoff getrennt zerkleinert, getrennt gewogen und einem Mischer (13) in wählbarem Verhältnis zugeführt und darin gemischt werden.

2. Anlage, insbesondere zur Durchführung des Verfahrens nach Anspruch 1, zur Herstellung eines Feststoffes in Form von Pellets, Flocken oder Granulat aus einer Mischung aus wenigstens einem ersten und wenigstens einem zweiten Ausgangsstoff, mit einem Mischer (13) und mindestens einem Extruder (23, 24), mit einem Kühler (26) und einer diesem nachgeordneten Austrittstelle (A) für das Fertigprodukt, wobei die vorerwähnten Anlageteile in Richtung des Fertigungsflusses durch Förderer verbunden sind, dadurch gekennzeichnet, dass die Anlageteile weiter wenigstens einen Silo (7) zur Lagerung des ersten Ausgangsstoffes, sowie je eine Eingabestelle (G, 18) für den ersten und den zweiten Ausgangsstoff aufweisen, welchen Ausgangsstoffen je eine Wäge- und Zerkleinerungseinrichtung (8, 10, 15, 16) zugeordnet ist, dass die erwähnten Anlageteile auf einer rechteckigen Grundfläche (1) angeordnet sind, dass sich der Kühler (26) zwischen den beiden Schmalseiten (2, 3) der Grundfläche (1) befindet, und dass der bzw. die Extruder (23, 24) zwischen dem Kühler (26) und einer der Schmalseiten (2) und die Eingabestelle (G) bzw. die Silos (7), die Zerkleinerungs- und Wägeeinrichtungen (8, 10, 15, 16) sowie der Mischer (13) zwischen dem Kühler (26) und der anderen Schmalseite (3) angeordnet sind.

3. Anlage nach Anspruch 2, dadurch gekennzeichnet, dass mehrere Silos (7) nebeneinander an einer Längsseite (4) und die Wäge- und Zerkleinerungseinrichtungen (8, 10, 15, 16) sowie der Mischer (13) an der anderen Längsseite (5) zur rechteckigen Grundfläche (1) angeordnet sind.

4. Anlage nach Anspruch 2 oder 3, dadurch gekennzeichnet, dass die rechteckige Grundfläche (1) durch eine transportierbare Grundplatte gebildet ist.

5. Anlage nach einem der Ansprüche 2 bis 4, dadurch gekennzeichnet, dass zwischen dem Kühler (26) und dem nächstliegenden Silo (7) ein im Fertigungsfluss zwischen den Mischer (13) und den Extruder (23, 24) geschalteter Zwischenspeicher (21) und vorzugsweise das Gebläse (27) des Kühlers (26) angeordnet sind.

6. Anlage nach einem der Ansprüche 2 bis 5, dadurch gekennzeichnet, dass die Wäge- und Zerkleinerungseinrichtungen eine von den Silos (7) selsttätig beschickbare Waage (8) und eine zwischen dieser und der erwähnten anderen Schmalseite (3) angeordnete Schlagmühle (10) aufweisen.

7. Anlage nach Anspruch 6, dadurch gekennzeichnet, dass zwischen der Waage (8) und dem Mischer (13) ein Zumischtrichter (14) an jenem Förderer (12) vorhanden ist, der von der Schlagmühle (10) zum Mischer (13) führt.

8. Anlage nach einem der Ansprüche 2 bis 7, dadurch gekennzeichnet, dass die Wäge- und Zerkleinerungseinrichtungen einen Fleischwolf (16) und eine zweite Waage (15) aufweisen, und dass der Mischer (13) die zweite Waage (15), der Fleischwolf (16) und die Eingabeöffnung (18) für einen weiteren Ausgangsstoff vertikal übereinander angeordnet sind.

9. Anlage nach einem der Ansprüche 2 bis 8, dadurch gekennzeichnet, dass der Extruder (23, 24) ein Trockenextruder ist.

10. Anlage nach einem der Ansprüche 4 bis 9, dadurch gekennzeichnet, dass alle Teile einschliesslich der Grundplatte (1) in einem Quader mit dem Verhältnis von Längsseite : Schmalseite : Höhe gleich 12 : 2,3 : 2,45 angeordnet sind.

## Claims

1. Process for the production of a solid in the form of pellets, flakes or granules from a mixture of at least one first and at least one second vegetable and/or animal starting material, which mixture is heated under super-atmospheric pressure in a reaction chamber (23, 24) to at least 100°C and is then depressurized to atmospheric pressure for partial dewatering and for solidification, characterized in that at least the first starting material is flowable and storable in silos (7) and that the first and the second starting materials are separately comminuted, separately weighed and fed to a mixer (13) in a selectable ratio and are mixed therein.

2. Plant, in particular for carrying out the process according to Claim 1, for the production of a solid in the form of pellets, flakes or granules from a mixture of at least one first and at least one second starting material, having a mixer (13) and at least one extruder (23, 24), having a cooler (26) and an outlet point (A) arranged downstream of this for the finished product, the abovementioned plant components being connected in the direction of the process flow by conveyors, characterized in that the plant components are further provided with at least one silo (7) for storing the first starting material, and one input point (G, 18) each for the first and the second starting materials, a weighing and comminution device (8, 10, 15, 16) being assigned to each of the starting materials, that the plant components mentioned are arranged on a rectangular base (1), that the cooler (26) is situated between the two narrow sides (2, 3) of the base (1), and that the extruder or the extruders (23, 24) are arranged between the cooler (26) and one of the narrow sides (2) and the feed point (G), and the silos (7), the comminution devices and weighing devices (8, 10, 15, 16) and the mixer (13) are arranged between the cooler (26) and the other narrow side (3).

3. Plant according to Claim 2, characterized in that a plurality of silos (7) are arranged side-by-side on a longitudinal side (4) and the weighing and comminution devices (8, 10, 15, 16) and the mixer (13) are arranged on the other longitudinal side (5) to the rectangular base (1).

4. Plant according to Claim 2 or 3, characterized in that the rectangular base (1) is formed by a transportable baseplate.

5. Plant according to one of Claims 2 to 4, characterized in that, between the cooler (26) and the nearest silo (7), are arranged an intermediate store (21), connected in the process flow between the mixer (13) and the extruder (23, 24), and preferably the fan (27) of the cooler (26).

6. Plant according to one of Claims 2 to 5, characterized in that the weighing and comminution devices are provided with a balance (8), which is automatically feedable from the silos (7), and an impact mill (10), which is arranged between the balance and the other narrow side (3) mentioned.

7. Plant according to Claim 6, characterized in that between the balance (8) and the mixer (13) is provided an admix hopper (14) on that conveyor (12) which leads from the impact mill (10) to the mixer (13).

8. Plant according to one of Claims 2 to 7, characterized in that the weighing and comminution devices are provided with a mincer (16) and a second balance (15), and that the mixer (13), the second balance (15), the mincer (16) and the feed orifice (18) for another starting material are vertically arranged one above the other.

9. Plant according to one of Claims 2 to 8, characterized in that the extruder (23, 24) is a dry extruder.

10. Plant according to one of Claims 4 to 9, characterized in that all components including the baseplate (1) are arranged in a parallelepiped having a ratio of longitudinal side : narrow side : height equal to 12 : 2.3 : 2.45.

## Revendications

1. Procédé de préparation d'une matière solide sous forme de boulettes, flocons ou granulés à partir d'un mélange d'au moins un premier et au moins un deuxième produit de départ végétal et/ou animal, ce mélange étant chauffé sous pression dans un réacteur (23, 24) à au moins 100°C et ensuite on le détend pour déshydratation partielle et pour formation de matière solide à pression atmosphérique, caractérisé en ce qu'au moins le premier produit de départ est pulvérulent et peut être stocké en silos (7) et que le premier et le deuxième matériau de départ sont broyés séparément, pesés séparément et introduits dans un mélangeur (13) en proportion qu'on peut sélectionner et on les y mélange.

2. Installation notamment pour la mise en oeuvre du procédé selon la revendication 1, pour produire une matière solide sous forme de boulettes, flocons ou granulés à partir d'un mélange d'au moins un premier et au moins un deuxième produit de départ, avec un mélangeur (13) et au moins un extrudeur (23, 24), avec un réfrigérant (26) et un poste de sortie (A) disposé en aval pour le produit fini, les parties d'installation déjà mentionnées étant reliées par des convoyeurs dans le sens de la fabrication, caractérisée en ce que les parties d'installation présentent en outre au moins un silo (7) pour stocker le premier produit de départ, ainsi chaque fois un poste de chargement (G, 18) pour le premier et le deuxième produit de départ, à chaque produit de départ correspond un dispositif de pesée et de broyage (8, 10, 15, 16), les parties d'installation mentionnées sont disposées sur une surface de base (1) rectangulaire, de sorte que le réfrigérant (26) se trouve entre les deux petits côtés (2, 3) de la surface de base (1) et que le ou les extrudeurs (23, 24) se trouvent entre le réfrigérant (26) et l'un des petits côtés (2) et le poste de chargement (G) ou les silos (7), les dispositifs de broyage et de pesée (8, 10, 15, 16) ainsi que le mélangeur (13) se trouvent entre le réfrigérant (26) et l'autre petit côté (3).

3. Installation selon la revendication 2, caractérisée en ce que plusieurs silos (7) se trouvent côte à côte sur un grand côté (4) et les dispositifs de pesée et de broyage (8, 10, 15, 16) ainsi que le mélangeur (13) sont disposés sur l'autre grand côté (5) de la surface de base rectangulaire (1).

4. Installation selon la revendication 2 ou 3, caractérisée en ce que la surface de base (1) est formée par une plaque de base transportable.

5. Installation selon l'une des revendications 2 à 4, caractérisée en ce qu'entre le réfrigérant (26) et le silo le plus proche (7) se trouvent un réservoir intermédiaire (21) implanté entre le mélangeur (13) et l'extrudeur (23, 24) dans le circuit de fabrication et le ventilateur (27) du réfrigérant (26) de préférence.

6. Installation selon l'une des revendications 2 à 5, caractérisée en ce que les dispositifs de pesée et de broyage présentent une balance (8) qu'on peut alimenter automatiquement depuis les silos (7) et un broyeur à marteaux (10) disposé entre celle-ci et l'autre petit côté mentionné (3).

7. Installation selon la revendication 6, caractérisée en ce qu'entre la balance (8) et le mélangeur (13) se trouve une trémie mélangeuse (14) sur le convoyeur (12) qui conduit du broyeur à marteaux (10) au mélangeur (13).

8. Installation selon l'une des revendications 2 à 7, caractérisée en ce que les dispositifs de pesée et de broyage présentent un hachoir (16) et une deuxième balance (15) et que le mélangeur (13) et la deuxième balance (15), le hachoir (16) et l'orifice de chargement (18) pour un deuxième produit de départ sont disposés verticalement l'un au-dessus de l'autre.

9. Installation selon l'une des revendications 2 à 8, caractérisée en ce que l'extrudeur (23, 24) est un extrudeur à sec.

10. Installation selon l'une des revendications 4 à 9, caractérisée en ce que toutes les parties y compris la plaque de base (1) sont dispersées dans un parallélépipède rectangle dont la proportion longueur:largeur:hauteur est égale à 12:2,3:2,45.
